# EUROPEAN PATENT APPLICATION

(11) **EP 4 679 566 A1**
(43) Date of publication of application: **14.01.2026**
(21) Application number: 25763903.9
(22) Date of filing: 24.03.2025
(51) Int. Cl.: H01M 10/613

(54) **BATTERY LIQUID COOLING SYSTEM AND BATTERY PACK**

(30) Priority: 30.12.2024 CN 202423293125 U
(71) Applicant: Eve Energy Co., Ltd., Huizhou, Guangdong 516006 (CN)
(72) Inventor: ZHAO, Yuhang, Huizhou, Guangdong 516006 (CN); LI, Daolin, Huizhou, Guangdong 516006 (CN); SHI, Lin, Huizhou, Guangdong 516006 (CN); YANG, Xiong, Huizhou, Guangdong 516006 (CN)
(74) Representative: Prinz & Partner mbB
(86) International application number: PCT/CN2025/084338
(87) International publication number: WO 2025/232362

(57) **Abstract**

Provided are a battery liquid cooling system and a battery pack. The system includes at least two liquid cooling flow path modules. All the liquid cooling flow path modules are sequentially arranged in a first direction (X). The liquid cooling flow path module includes multiple serpentine tubes (400) and multiple expanded-joint tubes (600). All the serpentine tubes (400) are disposed side by side at intervals in the first direction (X). The serpentine tubes (400) extend in a second direction (Y). A folded-back flow channel extending in a length direction of the serpentine tube (400) is disposed within the serpentine tube (400). A liquid inlet end of the serpentine tube (400) and a liquid outlet end of the serpentine tube (400) are respectively disposed at two ends of the folded-back flow channel and are located at the same end in the length direction of the serpentine tube (400). Every two adjacent serpentine tubes (400) communicate with each other through two expanded-joint tubes (600) in an expansion manner. A first expanded-joint tube (600) of the two expanded-joint tubes (600) is a liquid inlet tube (610), and a second expanded-joint tube (600) of the two expanded-joint tubes (600) is a liquid outlet tube (620). The liquid inlet tube (610) communicates with liquid inlet ends on the serpentine tubes (400), and the liquid outlet tube (620) communicates with liquid outlet ends on the serpentine tubes (400).

## Description

The present application claims priority to Chinese Patent Application No. 202423293125.6, filed with the China National Intellectual Property Administration (CNIPA) on Dec. 30, 2024, the disclosure of which is incorporated herein by reference in its entirety.

### TECHNICAL FIELD

The present application relates to the technical field of battery packs, for example, a battery liquid cooling system and a battery pack.

### BACKGROUND

Currently, the mainstream cell types on the market include cylindrical cells, prismatic cells, pouch cells, and the like. Among them, the 46-series large cylindrical cells, which feature higher energy density, better safety and stability, and lower costs, have been widely used in electric vehicles and are expected to become the future development trend of electric vehicle batteries.

Large cylindrical battery packs mainly adopt a manner of contacting serpentine tube liquid cooling plates with the side surfaces of cells for heat management. This approach can enhance the structural strength of the entire pack, achieve high thermal management efficiency, and result in low pressure drop in the liquid cooling system. Therefore, for the high-temperature problem caused by super-fast charging, side liquid cooling with double-sided serpentine tubes is an inevitable trend for liquid cooling of large cylindrical batteries.

### Technical problem

The liquid cooling system with parallel serpentine tubes features low pressure drop. However, due to the limitations of the single flow channel design of serpentine tube liquid cooling and the large number of such tubes, it is difficult to ensure flow uniformity among individual serpentine tubes. This further leads to problems such as large temperature differences between cells in the battery pack and difficulties in cold plate layout design, thereby preventing the cooling efficiency of thermal management from reaching the ideal state.

### Technical solutions

The present application provides a battery liquid cooling system and a battery pack to ensure flow uniformity and low flow resistance of the battery liquid cooling system and reduce the space occupancy ratio of the battery liquid cooling system in the battery pack.

In a first aspect, an embodiment of the present application provides a battery liquid cooling system. The battery liquid cooling system includes at least two liquid cooling flow path modules, and all liquid cooling flow path modules are sequentially arranged in a first direction. A liquid cooling flow path module includes multiple serpentine tubes and multiple expanded-joint tubes. All the multiple serpentine tubes are disposed side by side at intervals in the first direction, the multiple serpentine tubes extend in a second direction, a folded-back flow channel is disposed within a serpentine tube and extends in the length direction of the serpentine tube, and a liquid inlet end and a liquid outlet end of the serpentine tube are respectively disposed at two ends of the folded-back flow channel and are located at the same end in the length direction of the serpentine tube. The second direction is perpendicular to the first direction. Every two adjacent serpentine tubes communicate with each other through two expanded-joint tubes in an expansion manner, a first expanded-joint tube of the two expanded-joint tubes is a liquid inlet tube, a second expanded-joint tube of the two expanded-joint tubes is a liquid outlet tube, the liquid inlet tube communicates with all liquid inlet ends on the every two adjacent serpentine tubes, and the liquid outlet tube communicates with all liquid outlet ends on the every two adjacent serpentine tubes.

In a second aspect, an embodiment of the present application provides a battery pack. The battery pack includes a box body, multiple cylindrical cells disposed within the box body, and the battery liquid cooling system described above. All the cylindrical cells are arranged in an array, multiple cylindrical cells arranged at intervals in the second direction are disposed between two adjacent serpentine tubes among the multiple serpentine tubes, a serpentine tube abuts against outer peripheral surfaces of cylindrical cells located on two sides of the serpentine tube, and the multiple serpentine tubes are each configured as a serpentine corrugated structure to be adapted to cylindrical surfaces of the multiple cylindrical cells.

### Beneficial effects

The battery liquid cooling system is divided into multiple liquid cooling flow path modules to divert the cooling liquid so that the cooling liquid flows more smoothly in the battery liquid cooling system and the heat dissipation performance can be improved. The above improvement facilitates the adjustment of flow distribution between the serpentine tubes in combination with the control of inner diameters of pipelines at various positions to ensure the flow uniformity and low flow resistance of each serpentine tube, and reduce the overall space occupancy ratio in the battery pack. Through the above optimization and improvement of the structure, the battery liquid cooling system is compact in space in the second direction, which helps to reduce the occupied space. Moreover, by virtue of the structure in which the multiple serpentine tubes are arranged in sequence and adjacent serpentine tubes are connected through the expanded-joint tubes, efficient liquid cooling flow path modules are formed. This effectively improves the cooling efficiency of the battery liquid cooling system so that the battery liquid cooling system has a better heat dissipation effect in the first direction while enhancing the operational reliability and stability. The design of the expanded-joint tube enables the quick connection between serpentine tubes, simplifies the assembly process, and improves the overall performance. The design of the folded-back flow channel on the serpentine tube enables the cooling liquid to enter and exit on the same side of the serpentine tube, regulates the flow trajectory of the cooling liquid inside the module, and enhances the heat exchange efficiency.

The battery pack adopts a combined design of the box body, the cylindrical cells, and the above-described battery liquid cooling system. By utilizing the design where the serpentine tube abuts against the outer peripheral surfaces of the cylindrical cells on two sides of the serpentine tube, double-sided liquid cooling for the cylindrical cells can be achieved so that the cooling liquid can directly contacts the surfaces of the cylindrical cells, thereby improving the heat exchange efficiency, ensuring a good heat conduction effect, and facilitating to solve the high-temperature problem caused by the super-fast charging of the cylindrical cells. Moreover, the array arrangement of cylindrical cells is adapted to the serpentine corrugated structure of the serpentine tubes so that the contact area between the cooling liquid and the surface of the battery is increased. This helps to achieve the consistency in temperature difference between cylindrical cells so that the battery pack can have efficient heat dissipation performance, the temperature uniformity of all cylindrical cells in the battery pack can be ensured, and the energy density and overall structural compactness of the battery pack can also be improved.

### BRIEF DESCRIPTION OF THE DRAWINGS

FIG. 1 is a schematic structural diagram of a battery liquid cooling system and a cylindrical cell according to an embodiment of the present application;
FIG. 2 is a partial enlarged view of part A of FIG. 1;
FIG. 3 is a top view of a battery liquid cooling system and a cylindrical cell according to an embodiment of the present application;
FIG. 4 is a schematic structural diagram of a serpentine tube, a first liquid supply terminal end, and an expanded-joint tube according to an embodiment of the present application;
FIG. 5 is a schematic structural diagram of a serpentine tube, a second liquid supply terminal end, and an expanded-joint tube according to an embodiment of the present application;
FIG. 6 is a schematic structural diagram of a serpentine tube, a first liquid discharge terminal end, and an expanded-joint tube according to an embodiment of the present application;
FIG. 7 is a sectional view of a current collector according to an embodiment of the present application;
FIG. 8 is a schematic structural diagram of an expanded-joint tube according to an embodiment of the present application;
FIG. 9 is a side view of an expanded-joint tube according to an embodiment of the present application;
FIG. 10 is a sectional view of an expanded-joint tube according to an embodiment of the present application;
FIG. 11 is a schematic structural diagram of a battery pack according to an embodiment of the present application; and
FIG. 12 is a top view of a battery pack according to an embodiment of the present application.

### List of reference numbers

- X: first direction
- Y: second direction
- 101: first liquid cooling flow path module
- 102: second liquid cooling flow path module
- 200: box body
- 201: liquid inlet port
- 202: liquid outlet port
- 300: cylindrical cell
- 400: serpentine tube
- 410: serpentine flat tube
- 411: liquid inlet flow channel
- 412: liquid outlet flow channel
- 420: current collector
- 421: first groove
- 422: first hole
- 423: second groove
- 424: second hole
- 425: first space
- 426: second space
- 430: blocking member
- 510: liquid inlet channel
- 511: liquid inlet terminal end
- 512: first liquid supply terminal end
- 513: second liquid supply terminal end
- 520: liquid outlet channel
- 521: liquid outlet terminal end
- 522: first liquid discharge terminal end
- 523: second liquid discharge terminal end
- 600: expanded-joint tube
- 601: outer layer shell
- 602: inner layer shell
- 610: liquid inlet tube
- 620: liquid outlet tube

### DETAILED DESCRIPTION

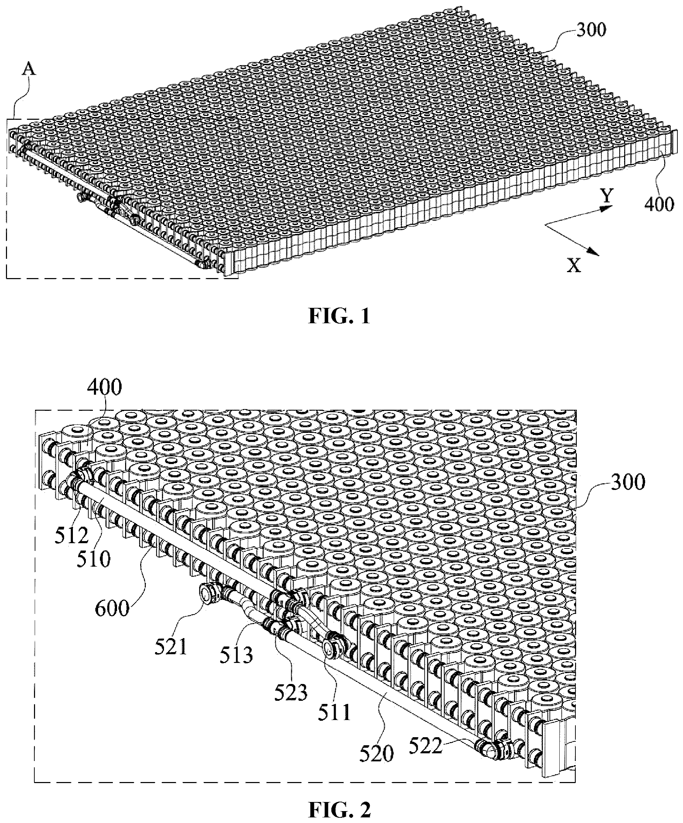

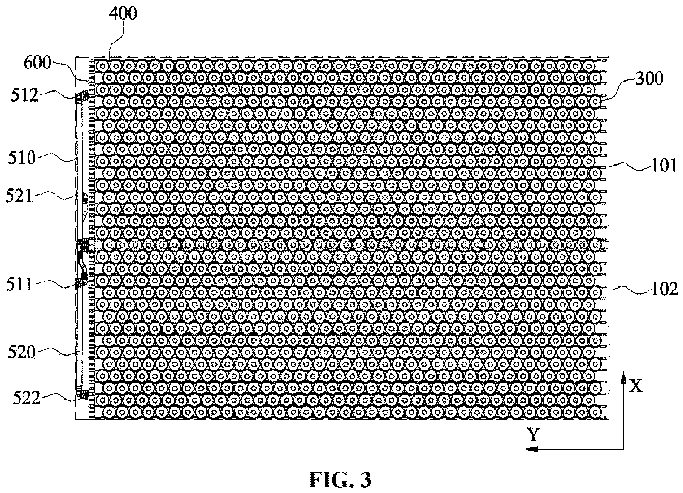

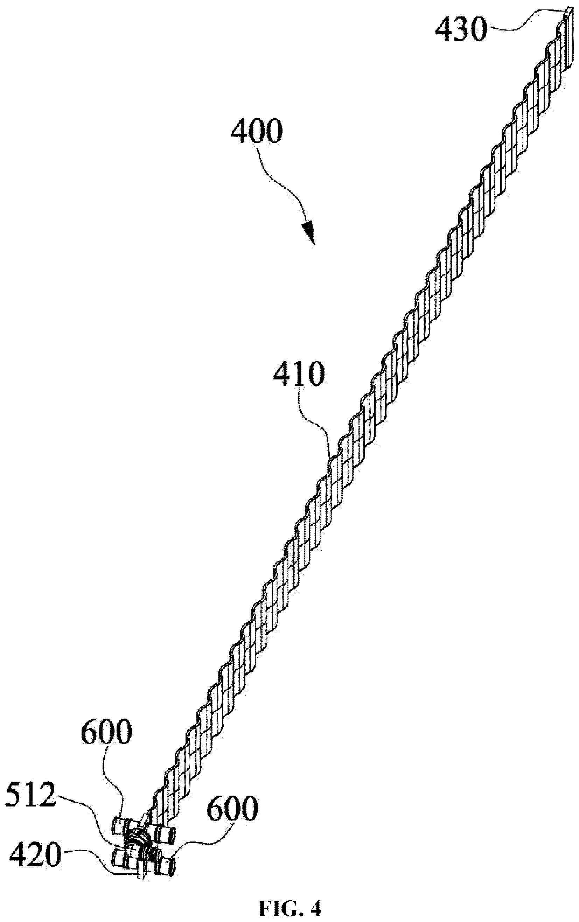

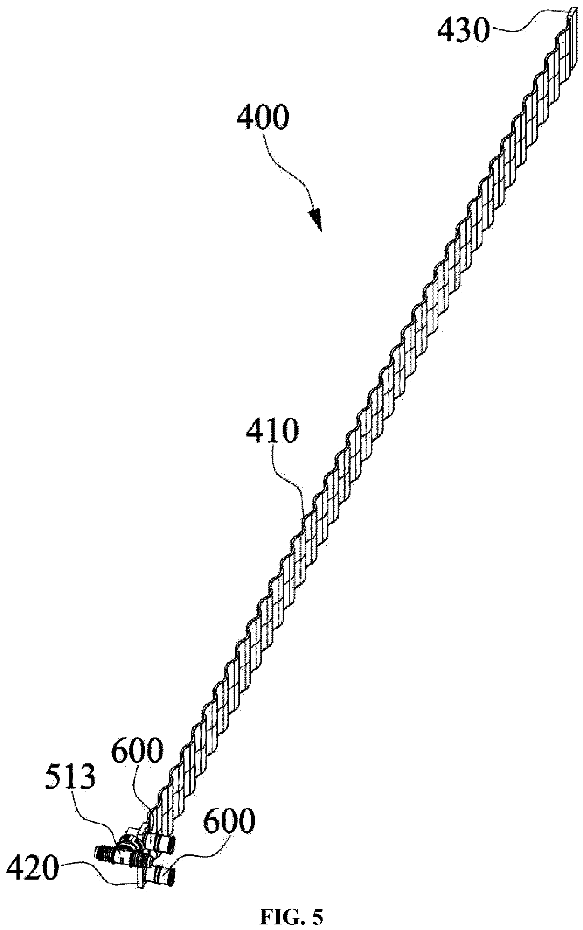

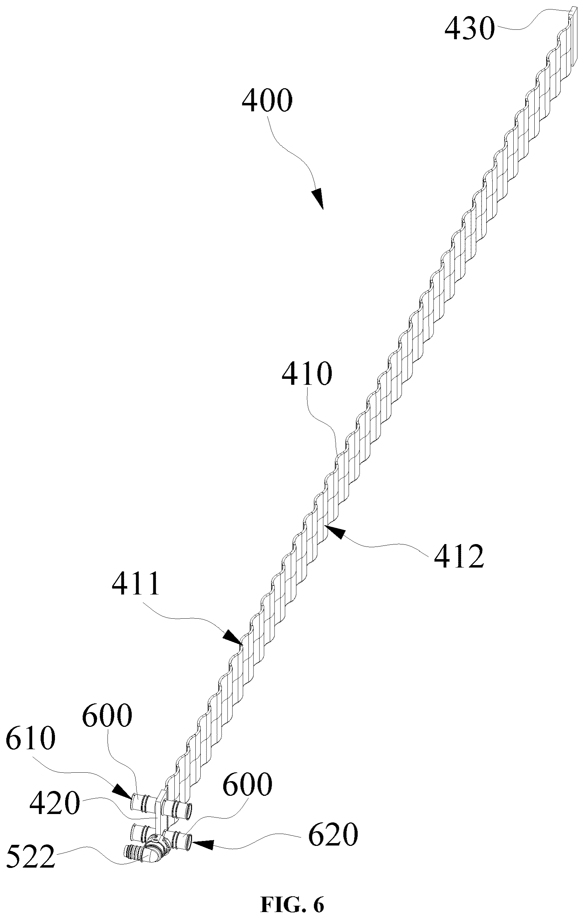

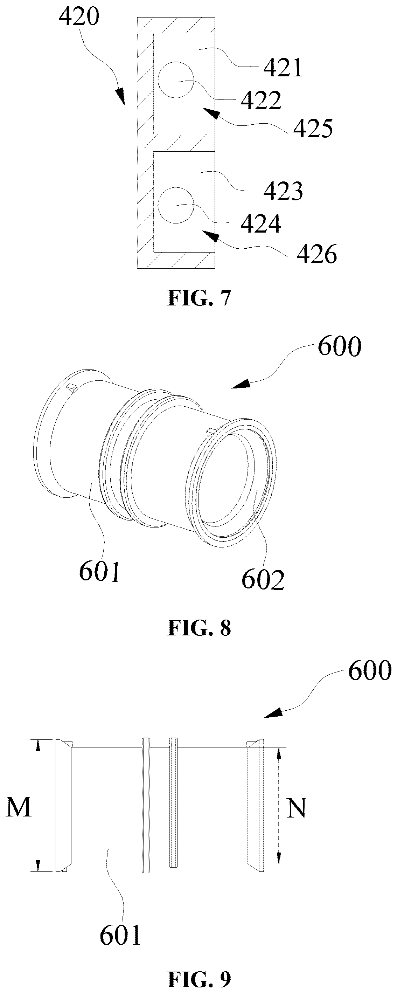

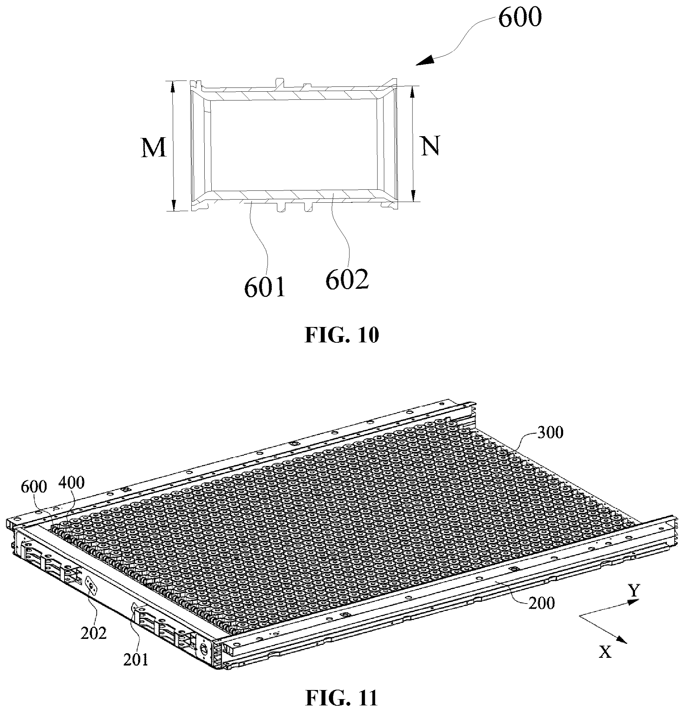

As shown in FIGS. 1 to 10, this embodiment provides a battery liquid cooling system. The battery liquid cooling system includes at least two liquid cooling flow path modules. All the liquid cooling flow path modules are sequentially arranged in a first direction X. A liquid cooling flow path module includes multiple serpentine tubes 400 and multiple expanded-joint tubes 600. All the serpentine tubes 400 are disposed side by side at intervals in the first direction X. The serpentine tubes 400 extend in a second direction Y. A folded-back flow channel extending in the length direction of the serpentine tube 400 is disposed within a serpentine tube 400. A liquid inlet end of the serpentine tube 400 and a liquid outlet end of the serpentine tube 400 are respectively disposed at two ends of the folded-back flow channel and are located at the same end in the length direction of the serpentine tube 400. The second direction Y is perpendicular to the first direction X. Every two adjacent serpentine tubes 400 communicate with each other through two expanded-joint tubes 600 in an expansion manner, a first expanded-joint tube 600 of the two expanded-joint tubes 600 is a liquid inlet tube 610, a second expanded-joint tube 600 of the two expanded-joint tubes 600 is a liquid outlet tube 620, the liquid inlet tube 610 communicates with all liquid inlet ends on the serpentine tubes 400, and the liquid outlet tube 620 communicates with all liquid outlet ends on the serpentine tubes 400.

In this embodiment, two liquid cooling flow path modules, i.e., a first liquid cooling flow path module 101 and a second liquid cooling flow path module 102, are provided.

The battery liquid cooling system is divided into multiple liquid cooling flow path modules to divert the cooling liquid so that the cooling liquid flows more smoothly in the battery liquid cooling system and the heat dissipation performance can be improved. The above improvement facilitates the adjustment of flow distribution between the multiple serpentine tubes 400 in combination with the control of inner diameters of pipelines at multiple positions to ensure the flow uniformity and low flow resistance of each serpentine tube 400, and reduce the overall space occupancy ratio in the battery pack. Through the above optimization and improvement of the structure, the battery liquid cooling system is compact in space in the second direction Y, which helps to reduce the occupied space. Moreover, by virtue of the structure in which the multiple serpentine tubes 400 are arranged in sequence and adjacent serpentine tubes 400 are connected through the expanded-joint tube 600, efficient liquid cooling flow path modules are formed. This effectively improves the cooling efficiency of the battery liquid cooling system so that the battery liquid cooling system has a better heat dissipation effect in the first direction X while enhancing the operational reliability and stability. The design of the expanded-joint tube 600 enables the quick connection between serpentine tubes 400, simplifies the assembly process, and improves the overall performance. The design of the folded-back flow channel on the serpentine tube 400 enables the cooling liquid to enter and exit on the same side of the serpentine tube 400, regulates the flow trajectory of the cooling liquid inside the module, and enhances the heat exchange efficiency.

In this embodiment, the expanded-joint tube 600 has an inner layer shell 602 and an outer layer shell 601 sleeved outside the inner layer shell 602, and the hardness of the inner layer shell 602 is less than the hardness of the outer layer shell 601.

The expanded-joint tube 600 is designed to have the inner layer shell 602 and the outer layer shell 601, and the hardness of the inner layer shell 602 is less than the hardness of the outer layer shell 601. The inner layer shell 602 is made of a flexible material, which facilitates connection with the serpentine tube 400. Moreover, the inner layer shell 602 has a certain elasticity and thus may adapt to a minor deformation in the battery liquid cooling system. The outer layer shell 601 is made of a hard material to improve the durability and reliability of the expanded-joint tube 600. Through the above design, the expanded-joint tube 600 has the advantages of space saving and low manufacturing cost, and it is easier to operate when the expanded-joint tube 600 is connected to the serpentine tube 400, thereby improving the connection efficiency and the service life, and ensuring the firmness and sealing of the connection.

In some implementations, an end of the expanded-joint tube 600 is provided with a flare, the outer diameter of the flare is M, and the outer diameter of a middle part of the expanded-joint tube 600 is N, where 1.1N < M < 1.4N.

The flared design at the end of the expanded-joint tube 600 renders the expanded-joint tube 600 more stable and reliable during connection, and can reduce the risk of cooling liquid leakage. The outer diameter of the flare and the outer diameter of the middle part of the expanded-joint tube 600 are dimensionally limited so that the optimized design of the structure of the expanded-joint tube 600 is achieved, the smooth flow of the cooling liquid at the connection is ensured, the operational reliability of the liquid cooling flow path module is improved, and excessive material waste is avoided.

In some implementations, the magnitude of N may be determined according to the magnitude of the flow rate of the battery liquid cooling system and the number of serpentine tubes 400.

In this embodiment, the expanded-joint tube 600 is integrally formed by using a two-color injection molding process.

The expanded-joint tube 600 is integrally formed by using the two-color injection molding process, which improves the production efficiency and the product quality, ensures the integrity and consistency of the product, and enhances the structural strength and durability of the expanded-joint tube 600. Moreover, this process simplifies the production process, reduces the production cost, makes the production process more concise and efficient, and improves the appearance quality and service life of the expanded-joint tube 600.

In one implementation of this embodiment, the inner layer shell 602 is made of a flexible nylon material, and the outer layer shell 601 is made of a rigid nylon material. Exemplarily, the flexible nylon material includes thermoplastic elastomer (TPE)/thermoplastic polyurethane (TPU) elastomer and other such materials, and the rigid nylon material includes polyhexamethylene adipamide (PA66), polydodecanolactam (PA12), polyphenylene sulfide (PPS), and other such materials.

The inner layer shell 602 of the expanded-joint tube 600 is made of the flexible nylon material so that the flexibility and impact resistance of the expanded-joint tube 600 are enhanced, and the expanded-joint tube 600 has better elasticity and adaptability to absorb incoming materials and stacking tolerances. The rigid nylon material plays a role in improving the structural strength and durability, whereby the hardness and wear resistance of the expanded-joint tube 600 are improved, the durability and corrosion resistance of the expanded-joint tube 600 are improved, and the reliability and assembly efficiency of the expanded-joint tube 600 during operation can be ensured. The above improvement enables the expanded-joint tube 600 to adapt to the high requirements and complex environment of the battery liquid cooling system, satisfying different requirements of the battery liquid cooling system.

In other implementations of this embodiment, the material of the inner layer shell 602 or the outer layer shell 601 may be selected by those skilled in the art according to engineering practice.

In this embodiment, the folded-back flow channel is configured as a single folded-back structure.

The folded-back flow channel is configured as the single folded-back structure so that the folded-back flow channel is arranged in a U-shaped circuit. The above improvement enables the cooling liquid to be more uniformly distributed when flowing within the serpentine tube 400, enhances the flow efficiency and cooling effect of the cooling liquid in the serpentine tube 400, improves the heat exchange efficiency, improves the heat dissipation performance of the battery liquid cooling system, ensures the temperature uniformity of the whole battery liquid cooling system, saves space, reduces the occupied space, simplifies the specific structure of the serpentine tube 400, and reduces the production cost.

In some implementations, the serpentine tube 400 includes a serpentine flat tube 410, a current collector 420, and a blocking member 430. The current collector 420 and the blocking member 430 are respectively connected to two ends of the serpentine flat tube 410. A liquid inlet flow channel 411 and a liquid outlet flow channel 412 extend in the length direction of the serpentine flat tube 410 and are disposed within the serpentine flat tube 410. The blocking member 430 is provided with a transfer groove. The transfer groove communicates the liquid inlet flow channel 411 with the liquid outlet flow channel 412. The current collector 420 is provided with a first space 425 and a second space 426. The first space 425 communicates the liquid inlet flow channel 411 with the liquid inlet tube 610, and the second space 426 communicates the liquid outlet flow channel 412 with the liquid outlet tube 620.

The serpentine tube 400 is designed to include the serpentine flat tube 410, the current collector 420, and the blocking member 430, which achieves the smooth flow and effective management of the cooling liquid in the serpentine tube 400. This makes the liquid inlet flow channel 411 and liquid outlet flow channel 412 more reasonable, and improves the overall structure and functionality of the serpentine tube 400. Moreover, the design of the first space 425 and the second space 426 on the current collector 420 together with the design of the transfer groove on the blocking member 430 makes the flow of cooling liquid in the serpentine tube 400 smoother, thereby ensuring that the cooling liquid can flow in and out of the serpentine tube 400 smoothly.

In some implementations, the current collector 420 is concavely provided with a first groove 421 and a second groove 423. The side wall of the first groove 421 is provided with a first hole 422. The first groove 421 communicates with the first hole 422 and forms the first space 425. The liquid inlet flow channel 411 partially extends into the first groove 421. The liquid inlet tube 610 is inserted into the first hole 422. The side wall of the second groove 423 is provided with a second hole 424. The second groove 423 communicates with the second hole 424 and forms the second space 426. The liquid outlet flow channel 412 partially extends into the second groove 423. The liquid outlet tube 620 is inserted into the second hole 424.

The first groove 421, the second groove 423, and the corresponding liquid inlet hole (first hole 422) and liquid outlet hole (second hole 424) which are disposed on the current collector 420 enable the liquid inlet tube 610 and liquid outlet tube 620 to be conveniently inserted, thereby resulting in smoother liquid inlet and outlet, improving the fluidity of the battery liquid cooling system, and enhancing the heat dissipation effect. The above improvement also simplifies the assembly process of the expanded-joint tube 600 and improves the stability and reliability of the connection. Moreover, the liquid inlet tube 610 and the liquid outlet tube 620 are connected to the current collector 420 in an insertion manner, and the liquid inlet flow channel 411 and the liquid outlet flow channel 412 communicate with the liquid inlet tube 610 and the liquid outlet tube 620, respectively. The above design simplifies the connection process, makes the inflow and outflow of the cooling liquid more orderly and efficient, achieves the effective diversion and merging of the cooling liquid in the serpentine tube 400, improves the operation efficiency of the battery liquid cooling system, and improves the operation reliability.

The above improvement ensures the ability of the serpentine tube 400 to perform flow planning in the narrow space, ensures the distribution uniformity of the flow rate of the serpentine tube 400 and the pressure drop performance, achieves the full utilization of the space occupied by the serpentine tube 400, and helps to reduce the quantity of material kinds required for manufacturing the serpentine tube 400.

In some implementations, the battery liquid cooling system further includes a liquid inlet channel 510 and a liquid outlet channel 520 disposed on a side of all the serpentine tubes 400. A first end of the liquid inlet channel 510 is provided with a liquid inlet terminal end 511, a second end of the liquid inlet channel 510 is provided with a first liquid supply terminal end 512, and a middle part of the liquid inlet channel 510 is provided with at least one second liquid supply terminal end 513. The sum of the number of first liquid supply terminal ends 512 and the number of second liquid supply terminal ends 513 is equal to the number of liquid cooling flow path modules. The first liquid supply terminal end 512 and each second liquid supply terminal end 513 each correspond to one liquid cooling flow path module. The first liquid supply terminal end 512 and all the second liquid supply terminal ends 513 are respectively inserted into one current collector 420 and communicate with the groove bottom of the corresponding first groove 421. A first end of the liquid outlet channel 520 is provided with a first liquid discharge terminal end 522, a second end of the liquid outlet channel 520 is provided with a liquid outlet terminal end 521, and a middle part of the liquid outlet channel 520 is provided with at least one second liquid discharge terminal end 523. The sum of the number of first liquid discharge terminal ends 522 and the number of second liquid discharge terminal ends 523 is equal to the number of liquid cooling flow path modules. The first liquid discharge terminal end 522 and each second liquid discharge terminal end 523 correspond to one liquid cooling flow path module. The first liquid discharge terminal end 522 and all the second liquid discharge terminal ends 523 are respectively inserted into one current collector 420 and communicate with the groove bottom of the corresponding second groove 423.

All the liquid inlet channel 510 and the liquid outlet channel 520 are integrated on one side of the liquid cooling flow path module so that the layout trajectory of the liquid inlet channel 510 and the liquid outlet channel 520 can be shortened, the space occupied by the liquid cooling flow path modules is reduced, the extremely simplified design of the pipelines in the battery liquid cooling system is achieved, the production cost of the battery liquid cooling system is reduced, and the space utilization rate is improved.

The cooperation among the terminal end of the liquid inlet tube 610, the terminal end of the liquid outlet tube 620, the liquid supply terminal end in the middle part, the liquid discharge terminal end in the middle part and the current collector 420 makes the management of the cooling liquid more centralized and orderly. The arrangement of the liquid inlet terminal end 511 and the liquid outlet terminal end 521 enables the cooling liquid to flow in and out of each liquid cooling flow path module more uniformly, thereby achieving the efficient transmission of the cooling liquid, and improving the cooling efficiency and heat dissipation effect of the battery liquid cooling system. Moreover, the second liquid supply terminal end 513 and the second liquid discharge terminal end 523 disposed in the middle part may be expanded and connected according to the number of liquid cooling flow path modules, thereby improving the flexibility of the battery liquid cooling system.

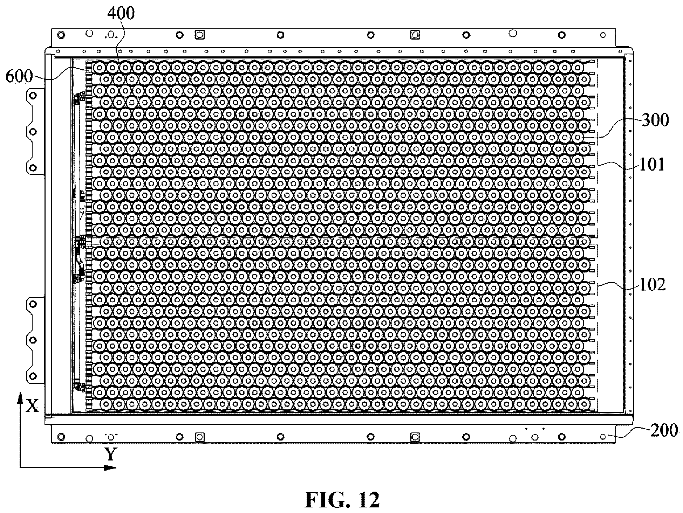

As shown in FIGS. 1 to 12, this embodiment further provides a battery pack. The battery pack includes a box body 200, multiple cylindrical cells 300 disposed within the box body 200, and the battery liquid cooling system described above. All the cylindrical cells 300 are arranged in an array. The multiple cylindrical cells 300 arranged at intervals in the second direction Y are disposed between two adjacent serpentine tubes 400. The serpentine tube abuts against outer peripheral surfaces of cylindrical cells 300 located on the two sides of the serpentine tube 400, and the serpentine tube 400 is configured as a serpentine corrugated structure to be adapted to the cylindrical surfaces of the cylindrical cells 300.

The battery pack adopts a combined design of the box body 200, the cylindrical cells 300, and the above-described battery liquid cooling system. By utilizing the design where the serpentine tube 400 abuts against the outer peripheral surfaces of the cylindrical cells 300 on two sides of the serpentine tube 400, the double-sided liquid cooling can be implemented for the cylindrical cells 300 so that the cooling liquid can directly contact the surface of the cylindrical cell 300, thereby improving the heat exchange efficiency, ensuring a good heat conduction effect, and helping to solve the high-temperature problem caused by the super-fast charging of the cylindrical cells 300. Moreover, the array arrangement of the cylindrical cells 300 is adapted to the serpentine corrugated structure of the serpentine tube 400 so that the contact area between the cooling liquid and the surface of the battery is increased, which helps to achieve the consistency in the temperature difference between cylindrical cells 300. In this manner, the battery pack can have efficient heat dissipation performance, the temperature uniformity of all cylindrical cells 300 in the battery pack is ensured, and the energy density and overall structural compactness of the battery pack are also improved.

In some implementations, the box body 200 is provided with a liquid inlet port 201 and a liquid outlet port 202. The liquid inlet terminal end 511 is inserted and connected to the liquid inlet port 201, and the liquid outlet terminal end 521 is inserted and connected to the liquid outlet port 202.

## Claims

1. A battery liquid cooling system, comprising at least two liquid cooling flow path modules, wherein all the at least two liquid cooling flow path modules are sequentially arranged in a first direction (X), and a liquid cooling flow path module of the at least two liquid cooling flow path modules comprises:
a plurality of serpentine tubes (400), wherein all the plurality of serpentine tubes (400) are disposed side by side at intervals in the first direction (X), the plurality of serpentine tubes (400) (400) extend in a second direction (Y), a serpentine tube (400) of the plurality of serpentine tubes (400) is provided with a folded-back flow channel extending in a length direction of the serpentine tube (400), a liquid inlet end of the serpentine tube (400) and a liquid outlet end of the serpentine tube (400) are respectively disposed at two ends of the folded-back flow channel and are located at a same end in the length direction of the serpentine tube (400), and the second direction (Y) is perpendicular to the first direction (X); and
a plurality of expanded-joint tubes (600), wherein every two adjacent serpentine tubes (400) among the plurality of serpentine tubes (400) communicate with each other through two expanded-joint tubes (600) among the plurality of expanded-joint tubes (600) in an expansion manner, a first expanded-joint tube (600) of the two expanded-joint tubes (600) is a liquid inlet tube (610), a second expanded-joint tube (600) of the two expanded-joint tubes (600) is a liquid outlet tube (620), the liquid inlet tube (610) communicates with all liquid inlet ends on the every two adjacent serpentine tubes (400), and the liquid outlet tube (620) communicates with all liquid outlet ends on the every two adjacent serpentine tubes (400).

2. The battery liquid cooling system of claim 1, wherein an expanded-joint tube (600) of the plurality of expanded-joint tubes (600) has an inner layer shell (602) and an outer layer shell (601) sleeved outside the inner layer shell (602), and a hardness of the inner layer shell (602) is less than a hardness of the outer layer shell (601).

3. The battery liquid cooling system of claim 2, wherein an end of the expanded-joint tube (600) is provided with a flare, an outer diameter of the flare is M, and an outer diameter of a middle part of the expanded-joint tube (600) is N, wherein 1.1N < M < 1.4N.

4. The battery liquid cooling system of claim 2, wherein the expanded-joint tube (600) is integrally formed by using a two-color injection molding process.

5. The battery liquid cooling system of claim 2, comprising at least one of the following:
the inner layer shell (602) is made of a flexible nylon material; or
the outer layer shell (601) is made of a rigid nylon material.

6. The battery liquid cooling system of claim 1, wherein the folded-back flow channel is configured as a single folded-back structure.

7. The battery liquid cooling system of claim 6, wherein a serpentine tube (400) of the plurality of serpentine tubes (400) comprises a serpentine flat tube (410), a current collector (420) and a blocking member (430), the current collector (420) and the blocking member (430) are respectively connected to two ends of the serpentine flat tube (410), a liquid inlet flow channel (411) and a liquid outlet flow channel (412) which extend in a length direction of the serpentine flat tube (410) is formed in the serpentine flat tube (410), the blocking member (430) internally communicates the liquid inlet flow channel (411) and the liquid outlet flow channel (412), the current collector (420) is provided with a first space (425) and a second space (426), the first space (425) communicates the liquid inlet flow channel (411) with the liquid inlet tube (610), and the second space (426) communicates the liquid outlet flow channel (412) with the liquid outlet tube (620).

8. The battery liquid cooling system of claim 7, wherein the current collector (420) is concavely provided with a first groove (421) and a second groove (423), a side wall of the first groove (421) is provided with a first hole (422), the first groove (421) communicates with the first hole (422) and forms the first space (425), the liquid inlet flow channel (411) partially extends into the first groove (421), the liquid inlet tube (610) is inserted into the first hole (422), a side wall of the second groove (423) is provided with a second hole (424), the second groove (423) communicates with the second hole (424) and forms the second space (426), the liquid outlet flow channel (412) partially extends into the second groove (423), and the liquid outlet tube (620) is inserted into the second hole (424).

9. The battery liquid cooling system of claim 8, further comprising a liquid inlet channel (510) and a liquid outlet channel (520) disposed on a side of the plurality of serpentine tubes (400), wherein a first end of the liquid inlet channel (510) is provided with a liquid inlet terminal end (511), a second end of the liquid inlet channel (510) is provided with a first liquid supply terminal end (512), a middle part of the liquid inlet channel (510) is provided with at least one second liquid supply terminal end (513), a sum of a number of the first liquid supply terminal end (512) and a number of the at least one second liquid supply terminal ends (513) is equal to a number of the at least two liquid cooling flow path modules, the first liquid supply terminal end (512) and each of the at least one second liquid supply terminal ends (513) each correspond to one liquid cooling flow path module of the at least two liquid cooling flow path modules, the first liquid supply terminal end (512) and all the at least one second liquid supply terminal end (513) are respectively inserted into one current collector (420) and communicate with a groove bottom of the first groove (421) of the one current collector (420), a first end of the liquid outlet channel (520) is provided with a first liquid discharge terminal end (522), a second end of the liquid outlet channel (520) is provided with a liquid outlet terminal end (521), a middle part of the liquid outlet channel (520) is provided with at least one second liquid discharge terminal end (523), a sum of a number of the first liquid discharge terminal end (522) and a number of the at least one second liquid discharge terminal end (523) is equal to the number of the at least two liquid cooling flow path modules, the first liquid discharge terminal end (522) and each of the at least one second liquid discharge terminal end (523) each correspond to one liquid cooling flow path module of the at least two liquid cooling flow path modules, and the first liquid discharge terminal end (522) and all the at least one second liquid discharge terminal ends (523) are respectively inserted into one current collector (420) and communicate with a groove bottom of the second groove (423) of the one current collector (420).

10. A battery pack, comprising a box body (200), a plurality of cylindrical cells (300) disposed within the box body (200), and the battery liquid cooling system of any one of claims 1 to 9, wherein all the plurality of cylindrical cells (300) are arranged in an array, cylindrical cells (300) arranged at intervals in the second direction (Y) are disposed between two adjacent serpentine tubes (400) among the plurality of serpentine tubes (400), a serpentine tube (400) of the plurality of serpentine tubes (400) abuts against outer peripheral surfaces of cylindrical cells (300) located on two sides of the serpentine tube (400), and the plurality of serpentine tubes (400) are configured to be a serpentine corrugated structure adapted to cylindrical surfaces of the plurality of cylindrical cells (300).
